Europäisches Patentamt

European Patent Office

Office européen des brevets

(11) Publication number: 0 497 336 A2

# EUROPEAN PATENT APPLICATION

(21) Application number: 92101530.1

(22) Date of filing: 30.01.92

(51) Int. Cl.5: A23G 9/22

(30) Priority: 01.02.91 IT 25691

(43) Date of publication of application:
05.08.92 Bulletin 92/32

(84) Designated Contracting States:
AT BE CH DE DK ES FR GB GR IT LI LU MC
NL PT SE

(71) Applicant: FRIGOMAT S.r.l.
Via 1 Maggio
I-20070 Guardamiglio (Milan)(IT)

(72) Inventor: Trucco, Dario
Via O. Tabacchi, 45
I-10132 Torino(IT)

(74) Representative: Marietti, Giuseppe
STUDIO ASSOCIATO MARIETTI & PIPPARELLI
Viale Caldara 38
I-20122 Milano(IT)

(54) Stirrer for freezing cylinders.

(57) A stirrer for whipping cylinders of machines for the production of ice-cream or similar products comprises a plurality of rods (2) spaced between each other, means (3) to support said rods on a central shaft (4) for connection with a rotation driving shaft, one or more means (5, 5') for reciprocal fastening between said rods, as well as a plurality of scraping knives (6; 17) and stirring blades (7) mounted on said rods.

Fig.1

The present invention concerns a stirrer for the freezing cylinder of a machine for the production of ice-cream and similar products.

Machines of this type are known, in particular for the production of "soft" type ice-cream, which comprise a freezing cylinder inside which a screw-shaped stirrer is rotationally provided with a shaft equipped with blades which performs the product mixing with air, bringing it sequentially in contact with the cooled walls of the cylinder, as well as the product advancing for its delivery when the dispensing nozzle is operated.

Stirrers not provided with central axis and envisaging more blades substantially longitudinally positioned and radially oriented, spaced of 120 degrees and slightly inclined with respect to the cylinder axis are also known.

It was proposed to provide each of said blades with a plurality of scraping knives pushed against the inner wall of the whipping cylinder by means of springs acting in a substantially radial direction. The knives on one blade are longitudinally offset with respect to those provided on the other blades in a way they scrape the product on the whole inner surface of the whipping cylinder.

A stirrer of this kind allows better mixing if compared to a stirrer of the classical type, however it requires blades of considerable thickness and therefore its overall weight is high, and furthermore its cleaning is not easy and can involve problems of hygienic type, in that residues of product may remain trapped in the interstices formed between recesses, springs and knives.

Object of the present invention is to provide an improved stirrer for the production of ice-cream and the like, which overcomes the above-mentioned inconveniences and limitations, and in particular which is of light and simplified construction and allows a quick and effective cleaning of its parts.

This object is achieved by means of the invention which relates to a stirrer for freezing cylinders of machines for the production of ice-cream and similar products, of the type provided with one or more stirring blades and with a multiplicity of scraping knives, characterized in that it comprises a plurality of rods spaced between each other, means to support said rods on a central shaft for connection with a rotation driving shaft, as well as one or more means for reciprocally fastening said rods.

In a preferred embodiment, the scraping knives are rotatably mounted on said rods and are provided with elastic means urging them against the internal side wall of said freezing cylinder.

According to a particularly advantageous feature of the invention, the stirrer is deprived of central axis and is supported at one end on the driving motor and at the opposite end on the closing port of the whipping cylinder.

According to another advantageous feature of the invention, the rods are positioned in such a way as to form a circumference and to house in the thus defined internal space a fixed portion of the stirrer, fastened to the aforesaid closing port of the whipping cylinder.

Another advantage of the invention lies in the presence of at least two stirring blades at the outlet end of the stirrer, which force the product towards the cylinder closing port.

The invention will be now further described with reference to the accompanying drawings given by way of non limiting example, where:

- figure 1 is a partially sectional side view of an embodiment according to the invention;
- figure 2-4 are sectional views, in different points, of the embodiment of figure 1;
- figure 5 is a view of the stirrer of figure 1 seen from the outlet side;
- figure 6 is a partially sectional schematic view of the stirrer provided with scraping knives;
- figure 7 and 8 are respectively side and plan views of the scraping knives;
- figure 9 is a view in longitudinal section of a fixed portion of the stirrer;
- figure 10 is a side view of the closing port of a freezing cylinder provided with the stirrer according to the invention;
- figure 11 is a partial enlarged view of the stirrer with a scraping knife; and
- figure 12 is perspective view of a further embodiment of the stirrer.

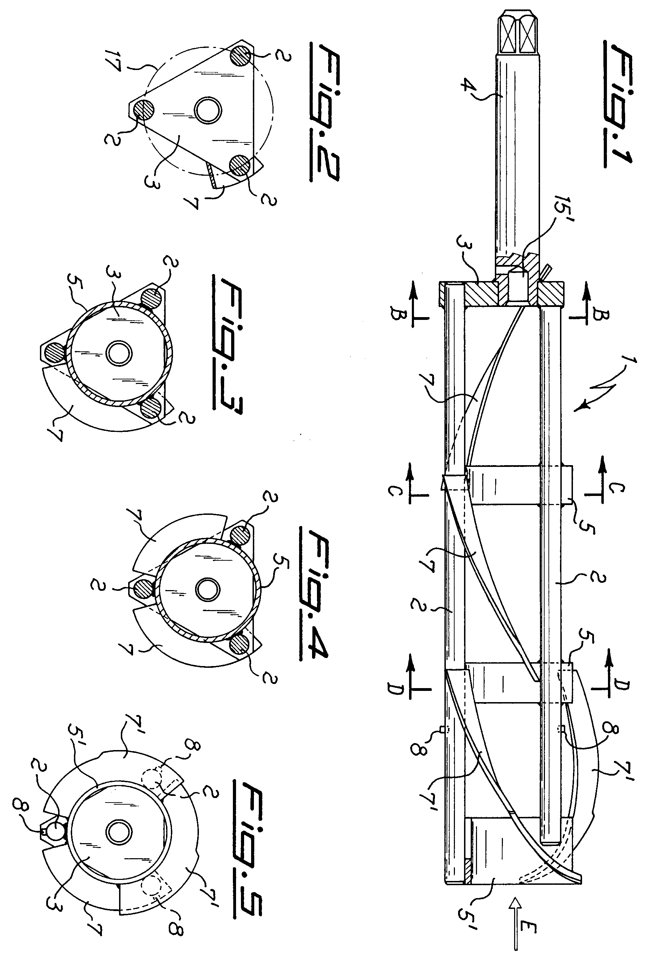

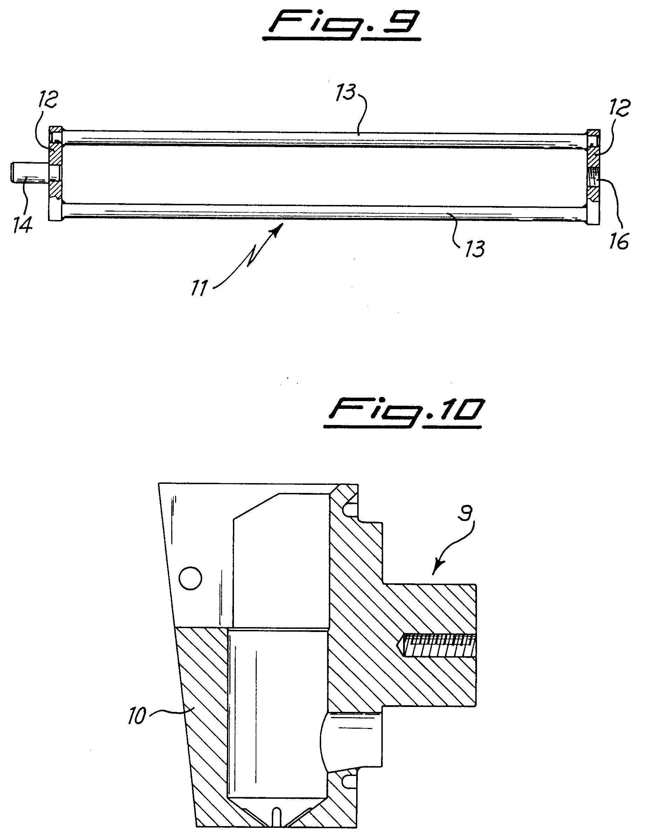

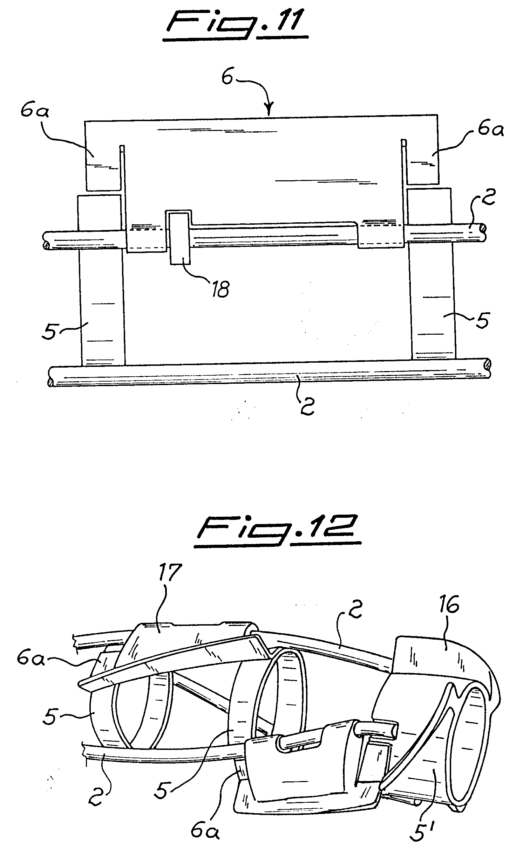

With reference first to figures 1 and 6, the stirrer 1, which is rotatable within the freezing cylinder C, is of the type provided with scraping knives and with one or more blades for the product mixing.

According to the invention, the stirrer 1 comprises a plurality of supporting rods 2 that are extending essentially for the whole lenght of the cylinder spaced from one another within the space of the freezing cylinder. At one end, the rods 2 are supported in a known way, for example by means of a plate 3, on a central shaft 4, mountable on a driving shaft (not shown) which allows its rotation inside the freezing cylinder. The stirrer 1 also comprises one or more means for reciprocally fastening the rods to each other, such as for instance the intermediate rings 5 and the terminal ring 5', which define three portions of substantially equal length on the stirrer.

In one preferential embodiment, the stirrer 1 comprises three rods 2 positioned along an ideal circumference, schematised by the dashed line 17 in figure 2, and fastened in a known way, for example by means of welding to the rings 5 and 5', on the outside of same.

The scraping knives 6 (not illustrated in figure 1) and the blades 7 are mounted offset on the rods 2, which preferably have circular section in order to allow said knives 6 to be mounted directly thereon and to rotate for a preset angle.

Preferably, as in the shown embodiment, rods 2 extend substantially for the whole length of the stirrer, while each of the blades 7 presents a length corresponding to a fraction of the length of the cylinder.

In a preferential embodiment of the invention, the blades extend in succession in a substantially longitudinal direction, in a way as to involve in their whole all the length of the whipping cylinder. For this purpose, as shown in figure 1, the blade positioned in correspondence with the stirrer portion adjacent to the shaft 4 extends sideways thereto, beyond the supporting plate 3.

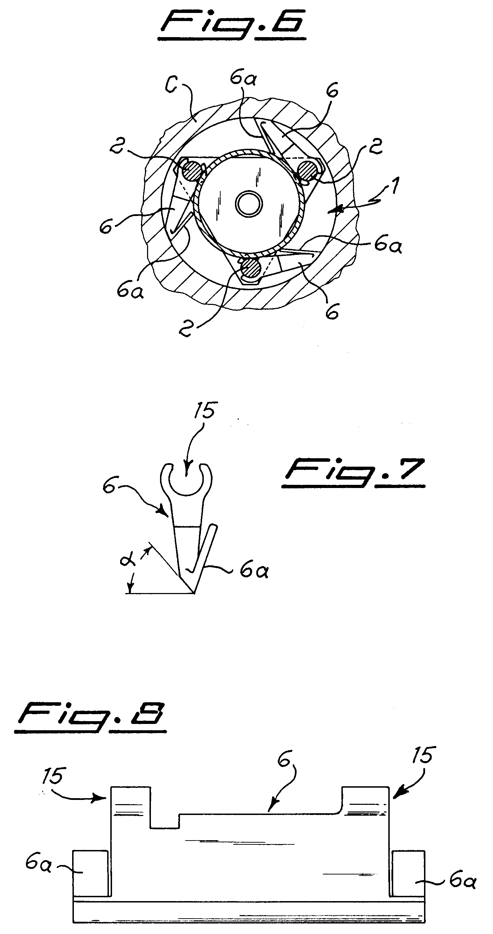

Furthermore, the blades 7 are helicoidally shaped and fastened between two adjacent rods, externally to them: as shown in figures 1 to 5, each blade has a length of approximately one third of the rods 2 and extends diagonally from a first rod to the adjacent one.

Said arrangement is illustrated in figures 2 to 4, which are sectional views along the plans B-B, C-C, D-D, and in figure 5 which is a view from E of the stirrer, without knives, of figure 1.

The blades 7 have a "paddling" function, namely they bring the product in contact with the cooled walls of the cylinder C, besides performing its mixing therein. The knives 6 are preferably offset, each on one rod 2, with respect to the direction of rotation, subsequent to the coming one of the corresponding helicoidal blade, so as to remove from the cooled wall the product previously spread thereon by said blade.

Thanks to the particular configuration of the stirrer 1 and the blades 7, one blade is generally sufficient for each portion of the stirrer. However, as shown in figure 1 and in figure 5, the portion of stirrer corresponding to the outlet end of the whipping cylinder is preferably provided with two blades 7'. These blades are two instead of one and are incurvated towards the ideal axis of the stirrer (not shown) with a screw pitch reduced in order to force the product out of the freezing cylinder.

The above arrangements are particularly useful in the case of machines wherein the product feeding to the whipping cylinder takes place by gravity.

Figures 7 and 8 show side and plan views respectively of a preferential shape of scraping knife according to the invention.

As it can be noticed, the knife presents a substantially prismatic shape with a scraping edge having an angle $\alpha$ of about 55-60 degrees (figure 7).

The knife 6 is also provided with two projecting seats 15 to be directly mounted onto the rods 2.

Preferably, to be forced on the rods 2, the knife is made of a relatively elastic plastic material such as for instance DELRIN or ULTEM (Registered Trademarks) so that the seats 15 can be temporarily deformed when they have to be mounted on or removed from the rods 2, though leaving the knife stiff enough to scrape on the walls of the whipping cylinder. Furthermore, knife 6 is provided with elastic means that are urging the knife against the internal wall of the freezing cylinder, as shown in fig. 6. Said elastic means are consisting of two flaps 6a provided at the two ends of the knife and angularly projecting from it. The flaps 6a being integral with the knife body, are also endowed with the elastic properties necessary for urging the knife against the cylinder. Quite obviously, to have this effect, the flaps 6a must be partially compressed against a corresponding portion of the stirrer, that in the preferred embodiment is consisting in the rings 5 and 5' (see fig. 11 and 12).

As previously mentioned, the stirrer 1 is preferably of the type without central axis: to support the stirrer, besides the already mentioned shaft 4, which supports and connects the stirrer on and to the driving shaft (not shown), there are provided further supporting means capable of cooperating with the closing port of the whipping cylinder.

More in particular, said supporting means of the stirrer consist of a terminal ring 5', which can be directly mounted or by interposing a bush of self-lubricating material, on a projecting section 9 of the port 10, shaped in a complementary way to the ring or the bush (not shown) and schematically illustrated in figure 10.

Figure 9 is a sectional view of a fixed portion 11 of the stirrer, which is housed inside the space defined by the rods 2 and is fastened, during operation, to the closing port of the cylinder. Said fixed portion preferably consists of two circular supporting flanges 12 to which are fastened one or more small bars 13 (two in fig. 9). One of the flanges 12 is provided with a projecting pin 14 or similar supporting means which cooperates with a corresponding seat 15 provided in the shaft 4 (figure 1). The opposite flange is provided with a threaded hole 16 for fastening said fixed portion to the aforesaid projecting portion 9 of the port 10 by means of a screw or nut. Alternatively, the fixed portion 11 can also be integral to the port 10 if appropriately inserted into the mold during molding of the port 10 itself.

In fig. 11 is shown a knife 6 mounted on a stirrer rod 2. As is apparent from this figure, the knife extends between two adjacent rings 5 (or 5 - 5') with its seats 15 next to said rings . Projecting element 18 on rod 2 guides the rotation of knife 6.

Flaps 6a are superimposable on rings 5 by rotation of knife 6; when the stirrer is inserted in the freezing cylinder, e.g after cleaning the whole apparatus, flaps 6a are manually compressed by urging the knife towards the rings, in order to enable the stirrer to be inserted in the cylinder. Once within the cylinder, flaps 6a are released and will urge the knife edge against the cylinder wall.

Fig. 12 discloses another preferred embodiment of the invention, where rods 2 are helicoidally shaped, while having a circular section to allow mounting of scraping knives 17. In this embodiment scraping knives 17 are helicoidally designed, contrary to knives 6 of previous figure 11. It is therefore possible to avoid the presence of blades 7 and 7'previously disclosed; because thanks to their shape, knives 17 are performing also the blades functions, i.e. besides scraping the cylinder wall they mix the product, paddle it on the wall of the freezing cylinder and force it towards the cylinder exit.

To help performing all these duties, the knife 17 edge is shaped differently from the edge of previously disclosed knife 6. In the preferred embodiment of fig. 12 the edge is curved opposite to the face where the flaps 6a are projecting from and is forming an with said body angle within the range from 45 to 135 degrees.

In order to help the output of the product, ring 5' is provided with three helicoidal blades 16 having a screw pitch reduced with respect to the screw pitch of knives 17.

This embodiment is much simpler than the previous ones as only three knives 17 are provided on the rods 2 and three blades 16 on terminal ring 5', no other blades being necessary.

## Claims

1. A stirrer (1) for freezing cylinders of machines for the production of ice-cream or similar products, of the type provided with one or more stirring blades (7; 16) and a multiplicity of scraping knives (6;17), characterized in that it comprises a plurality of rods (2) spaced from each other, means (3) to support said rods on a central shaft (4) for connection with a rotation driving shaft, as well as one or more means (5, 5' ) to reciprocally fasten said rods; and in that said scraping knives (6; 17) and said stirring blade or blades (7) are mounted on said rods.

2. A stirrer according to claim 1, characterized in that said scraping knives (6) are rotatably mounted on said rods (2) and in that they are provided with elastic means (6) urging them against the internal side wall of said cylinder.

3. A stirrer according to claim 2, wherein said elastic means are consisting in a pair of flaps (6a) angularly projecting from said knife body (6) and integral with it.

4. A stirrer according to claim 3, characterized in that it presents a plurality of blades (7) having length equal to a fraction of the length of said cylinder and extending in succession in longitudinal direction substantially involving all the length of said freezing cylinder.

5. A stirrer according to claim 4, wherin the stirring blades (7) arranged in correspondence to the outlet end of said cylinder are incurvated towards the ideal axis of the stirrer to force the product out of said whipping cylinder, the screw pitch being reduced in correspondence to the outlet end of said wipping cylinder.

6. A stirrer according to claim 4, wherein said rods (2) and said scraping knives (17) have an helicoidal shape, said scraping knives also acting as stirring blades.

7. A stirrer according to claim 4, wherein said rods are rectilineal and said stirring blade or blades have helicoidal shape and extend from a first rod to the next rod.

8. A stirrer according to any previous claim, of the type without central axis, characterized in that its end opposite to that of connection with said driving shaft is provided with supporting means (5') suitable to cooperate with the closing port (10) of said whipping cylinder to support the stirrer itself.

9. A stirrer according to any previous claim, characterized in that said means for reciprocal fastening are constituted by rings (5,5') and that said rods are fastened peripherally to said rings.

10. A stirrer according to any of the preceding claims, characterized in that it also comprises a fixed portion (11), fastened to the machine body and housed internally to the space defined by said rods.

11. A stirrer according to claim 10, characterized in that said fixed portion consists of two flanges (12) supporting one or more small bars (13), said flanges being respectively provided with supporting means (14) on said central shaft of the stirrer and with a housing seat (16) for a screw or similar fastening means to the closing port (10) of said whipping cylinder.

**12.** A stirrer according to one of the claims 7 to 10, characterized in that said supporting means cooperating with the closing port are consisted of a terminal ring (5') fixing the rods to each other, housable on a projecting portion (9) of the port (10) shaped in a complementary way to said ring.

**13.** A stirrer according to any of the preceding claims, characterized in that it comprises three rods (2) having circular section, helicoidally extending substantially for the whole length of said whipping cylinder, a supporting flange (3) of said rods on said central shaft (4); three supporting and fastening rings (5,5') for said rods (2) placed internally to the same; three helicoidal scraping knives-stirring blades (17) arranged offset to each other on the three portions of the stirrer defined by said rings (5,5') and by said flange (3); and three helicoidal blades (16) provided on the output end of said stirrer, adjacent to the closing port (10) of said freezing cylinder.

**14.** A stirrer according to claim 12, wherein said three rods (2) and said scraping knives (6) are rectilineal, wherein said output end of the stirrer has two helicoidal blades (7'), and further comprising one helicoidal blade (7) for each of the said three portions of the stirrer.

Fig.1  Fig.2  Fig.3  Fig.4  Fig.5

## _Fig.6_

## _Fig.7_

## _Fig.8_

_Fig.9_

_Fig.10_

_Fig.11_

_Fig.12_